# EUROPÄISCHE PATENTSCHRIFT

(11) **EP 2 966 757 B1**
(45) Veröffentlichungstag und Bekanntmachung des Hinweises auf die Patenterteilung: **07.09.2016**
(21) Anmeldenummer: 14176560.2
(22) Anmeldetag: 10.07.2014
(51) Int. Cl.: H02K 1/27

(54) **Blechpaketanordnung und elektrische Maschine mit einer solchen Blechpaketanordnung**
Laminated sheet package assembly and electric machine with such a laminated sheet package assembly
Système de paquet de tôles et machine électrique dotée d'un tel système de paquet de tôles

(43) Veröffentlichungstag der Anmeldung: 13.01.2016
(73) Patentinhaber: Siemens Aktiengesellschaft, 80333 München (DE)
(72) Erfinder: Männl, Andreas, 97720 Nüdlingen (DE)

(56) Entgegenhaltungen:
- WO-A1-2008/110542
- DE-A1- 10 010 091
- DE-A1- 10 016 002
- DE-A1-102006 049 866
- US-B1- 7 071 592

## Beschreibung

Die vorliegende Erfindung betrifft eine Blechpaketanordnung für eine elektrische Maschine, mit einem Blechpaket, das in einer Axialrichtung mindestens zwei Teilpakete mit jeweils einer Vielzahl von polygonförmigen Einzelblechen aufweist, wobei um den Umfang des Blechpakets permanenterregte Magnete angeordnet sind. Die Erfindung betrifft weiterhin eine elektrische Maschine mit einer solchen Blechpaketanordnung.

Es sind Servomotoren-Läufer bekannt, die mit einem polygonförmigen Blechpaket versehen sind, welches um den kompletten Umfang mit permanenterregten Plättchenmagneten bestückt ist und mit einem Glasfaserband bandagiert ist. Das Blechpaket weist dabei zwei Endseiten auf: eine Abtriebsseite (drive end) und eine Bürstenseite (non-drive end). Insbesondere ist an einer der Endseiten ein Endblech vorgesehen, welches üblicherweise größer ist als die restlichen Bleche. Solche Läufer werden anschließend schräg magnetisiert.

Die wesentlichen Vorteile einer solchen Anordnung sind, dass die hintereinander liegenden Magnete berührend angebracht werden können, so dass eine sehr kompakte Bauweise vorliegt. Da die Magnete am Endblech anschlagen, stehen die Magnete auf der gegenüberliegenden Endeseite über. An dieser offenen Seite ist in der Regel ausreichend Platz, so dass der Überstand nicht stört.

Eine solche Anordnung weist jedoch auch Nachteile auf. Insbesondere existieren zwischen den schräg aufmagnetisierten Polen sogenannte Pollücken. Da der Läufer am gesamten Umfang mit Magneten versehen ist, ergibt sich so Magnetmaterial, welches unmagnetisiert ist.

Bekannt sind auch alternative Anordnungen, bei denen das ungenutzte Magnetmaterial eingespart wird, indem die Pollücken unbestückt sind. Hierbei ist der Läufer gestaffelt aufgebaut, d.h. dass das Blechpacket in Axialrichtung hintereinander mindestens zwei Teilpakete aufweist, die zueinander verdreht sind. Bei diesem Aufbau sind die Teilpakete so groß gestaltet, dass die Magnete mit maximalen Abmessungen angebracht werden können. Hierdurch muss das Gesamtpaket verlängert werden, denn sonst kollidieren die Magnete mit den Kanten am Übergang der einzelnen Teilpakete. Da nicht alle Magnete die maximal mögliche Größe aufweisen, entstehen durch diesen Aufbau Spalten zwischen den einzelnen Magneten. Dies führt wiederum bei dem nachfolgenden Bandageprozess dazu, dass sich die Bandage zwischen die Magnete einziehen kann. Durch dieses Einziehen können einzelne Magnete verschoben werden, was einen negativen Einfluss auf die elektromagnetischen Werte des Motors hat.

Aus der Druckschrift WO 2008/110542 A1 ist ein Läufer mit einer mit Permanentmagneten bestückten polygonförmigen Blechpaketanordnung bekannt.

Der Erfindung liegt die Aufgabe zugrunde, eine Blechpaketanordnung mit einer kompakten Bauweise bzw. eine elektrische Maschine mit einer solchen Blechpaketanordnung zur Verfügung zu stellen.

Die Aufgabe wird erfindungsgemäß gelöst durch eine Blechpaketanordnung für eine elektrische Maschine, mit einem Blechpaket, das in einer Axialrichtung mindestens zwei Teilpakete mit jeweils einer Vielzahl von polygonförmigen Einzelblechen aufweist, wobei um den Umfang des Blechpakets permanenterregte Magnete angeordnet sind, wobei zwischen den Teilpaketen ein oder mehrere runde Einzelbleche angeordnet sind, deren Durchmesser kleiner oder gleich dem Innenkreis der polygonförmigen Einzelbleche ist.

Die Aufgabe wird weiterhin erfindungsgemäß gelöst durch eine elektrische Maschine mit einer solchen Blechpaketanordnung.

Die in Bezug auf die Blechpaketanordnung nachfolgend angeführten Vorteile und bevorzugten Ausgestaltungen lassen sich sinngemäß auf die elektrische Maschine übertragen.

Die Erfindung basiert auf der Idee, an den Kontaktstellen der Teilpakete Bleche mit runder Außenkontur anzubringen, deren Außendurchmesser kleiner ist als der Durchmesser des Innenkreises der anliegenden polygonförmigen Einzelbleche oder maximal dem Durchmesser des Innenkreises entspricht. Es entstehen daher zwischen den Teilpaketen Vertiefungen um den Umfang des Blechpakets, die von den Magneten übergedeckt werden können. Die Kanten am Übergang der einzelnen Teilpakete stören somit nicht mehr, wodurch ein Magnetüberstand durch die Magnettoleranzen möglich ist. Bei den polygonförmigen Einzelblechen handelt es sich insbesondere um regelmäßige Polygone, bei denen zumindest die Seiten, auf denen ein Magnet angebracht ist und die durch den Innenkreis des Polygons tangiert sind, gleich lang sind.

Aufgrund des Übergangs im Bereich der runden Einzelblechen zwischen den Teilpaketen werden die Magnettoleranzen abgefangen, so dass die Teilpakete kürzer gestaltet werden, da die Plättchenmagnete mit maximaler Toleranz nicht mit dem nächsten Teilpaket kollidieren. Durch die kürzeren Teilpakete ist eine kompaktere Bauweise möglich, wobei die Verlängerung in Richtung der offenen Endseite geringer ist bzw. entfällt.

Gemäß einer weiteren bevorzugten Ausgestaltung berühren sich die Magnete, die um den Umfang der Teilpakete angeordnet sind, im Bereich der runden Bleche. Hierdurch werden die Spalte zwischen den Magneten verringert bzw. es sind keine Spalte vorhanden. Dies hat insbesondere den positiven Effekt, dass sich die Glasfaserbandage nicht zwischen die Magnete einziehen kann. Dadurch ist die Gefahr des Verschiebens von Magneten verringert, die einen negativen Einfluss auf die elektromagnetischen Werte des Motors hat.

Im Hinblick auf einen besonders kompakten Aufbau der Blechpaketanordnung stehen die Magnete an mindestens einer Endseite des Blechpaktes über dem Teilpaket über. Dies wird dadurch ermöglicht, dass in der Regel an der offenen Endseite, die nicht durch ein Endblech definiert ist, mehr Platz vorhanden ist. Denkbar sind auch Ausführungen der Blechpaketanordnung, bei denen kein Endblech vorgesehen ist, so dass sowohl die Abtriebsseite als auch die Bürstenseite offen sind und die Magnete an beiden Endseiten über dem jeweiligen Teilpaket überstehen.

Im Hinblick auf Einsparung von Magnetmaterial sind gemäß einer bevorzugten Ausgestaltung die Teilpakete zueinander verdreht.

Ein Ausführungsbeispiel der Erfindung wird anhand einer Zeichnung näher erläutert. Hierin zeigen:
- FIG 1: eine perspektivische Darstellung eines mit Magneten bestückten Läufers,
- FIG 2: eine vergrößerte Draufsicht einer Blechpaketanordnung des Läufers gemäß FIG 1,
- FIG 3: in einer perspektivischen Darstellung eine Teilansicht auf das Blechpaket gemäß FIG 1, und
- FIG 4: ein Teilpaket mit angrenzenden runden Blechen.

Gleiche Bezugszeichen haben in verschiedene Figuren die gleiche Bedeutung.

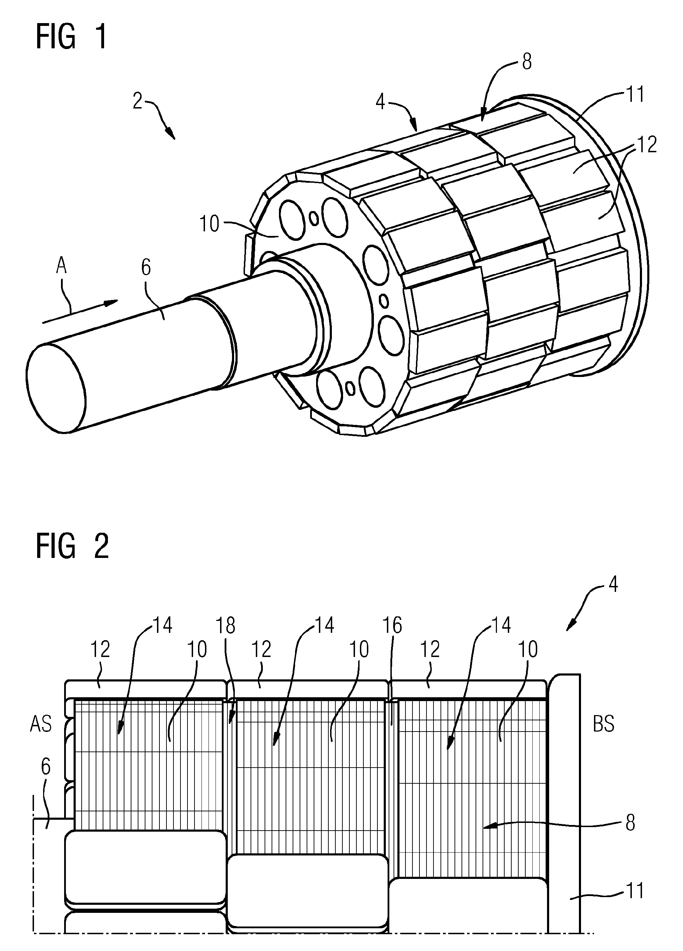

In FIG 1 ist ein Läufer 2 dargestellt, der eine Blechpaketanordnung 4 umfasst, die auf eine Welle 6 montiert ist. Die Blechpaketanordnung 4 setzt sich aus einem Blechpaket 8 und einer Vielzahl von permanenterregten Magneten 12 zusammen. Das Blechpaket 8 ist gebildet durch eine Vielzahl von polygonförmigen Einzelblechen 10, die in eine Axialrichtung A hintereinander angeordnet sind. Die permanenterregten Magneten 12, sind in mehreren Reihen um den Umfang des Blechpakets 8 angeordnet. Im zusammengebauten Zustand des Läufers 2 ist die Blechpaketanordnung 4 mit einem hier nicht näher gezeigten Glasfaserband bandagiert.

Unter polygonförmig wird hierbei verstanden, dass die Einzelbleche jeweils nach Art eines regelmäßigen Vielecks ausgebildet sind, so dass sie mehrere gleiche Seiten und gleiche Innenwinkel aufweisen. Unter Innenkreis des Polygons wird der Kreis verstanden, der zumindest die Seiten des Polygons, an denen Magnete angeordnet sind, an ihrem Inneren berührt (und nicht deren Verlängerungen).

Wie aus FIG 2 ersichtlich, sind die polygonförmigen Einzelbleche 10 in mehrere Teilpakete 14 gruppiert, die zueinander verdreht sind. Die polygonförmigen Einzelbleche 10 eines Teilpakets 14 sind hinsichtlich ihrer Außenkontur und Größe alle gleich und sind zudem deckungsgleich hintereinander angeordnet, so dass die Ecken der Polygone Kanten um den Umfang des Teilpakets 14 bilden, die sich in Axialrichtung erstrecken.

Unter "zueinander verdreht" wird hierbei verstanden, dass obwohl die Einzelbleche innerhalb eines Teilpakets 14 den gleichen Aufbau aufweisen, die Teilpakete 14 untereinander in Axialrichtung A nicht deckungsgleich angeordnet sind, so dass die Kanten um den Umfang der Teilpakete 14 nicht in einer Linie liegen.

Der Läufer 2 weist eine Abtriebsseite (drive end) AS und eine Bürstenseite (non-drive end) BS auf. An der Bürstenseite BS ist im gezeigten Ausführungsbeispiel die Blechpaketanordnung 4 mit einem Endblech 11 versehen. An der Abtriebsseite AS ist die Blechpaketanordnung 4 offen.

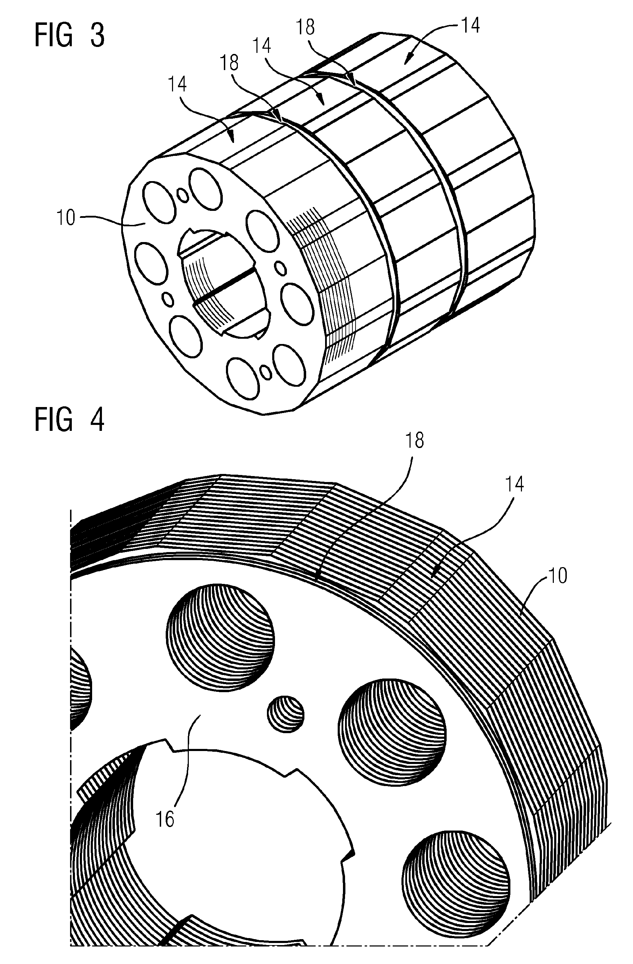

Zwischen den Teilpakten 14 sind runde Einzelbleche 16 vorgesehen. Die runden Einzelbleche 16 weisen einen Durchmesser auf, der kleiner ist oder maximal dem Durchmesser des Innenkreises des polygonförmigen Einzelbleches 10 entspricht. Somit sind an der Oberfläche des Blechpakets 4 um dessen Umfang zwischen den Teilpaketen 14 Vertiefungen 18 ausgebildet, die Übergangsbereiche zwischen den Teilpaketen 14 darstellen. Diese sind insbesondere in den FIG 2, FIG 3 und FIG 4 gut erkennbar.

Die Vertiefungen 18 setzen sich insbesondere aus einem oder mehreren runden Einzelblechen 16 zusammen, je nachdem wie groß die auszugleichenden Magnettoleranzen sind

Die Übergangsbereiche, die durch die runden Einzelbleche 16 gebildet sind, dienen insbesondere dazu, Magnettoleranzen auszugleichen. Dies ist in FIG 2 gezeigt. Die einzelnen Magnete 12, die sich über die Teilpakete 14 in Axialrichtung erstrecken, stoßen im Bereich der runden Bleche 16 aneinander. Dadurch ist eine kompakte Bauweise des Blechpakets 4 möglich und es entstehen keine Spalte zwischen den Magneten 12, in welchen sich eine hier nicht näher gezeigte Bandage um den Umfang des Blechpakets 4 einziehen kann.

Aus FIG 2 ist außerdem ersichtlich, dass die Magnete 12 der Blechpaketanordnung 4 im Bereich einer Abtriebsseite AS des Läufers 2 dem äußersten Teilblech 14 und somit dem Blechpaket 8 überstehen.

Aus Gründen der Einheitlichkeit ist es auch möglich für die Anfertigung der Blechpaketanordnung einzelne Blechmodule zur Verfügung zu stellen, die jeweils aus einem Teilpaket 14 und einem oder mehreren runden Einzelblechen 16 bestehen. Durch die Aneinanderreihung der vorgefertigten Module hintereinander wird das Blechpaket 8 auf einfacher Weise hergestellt. Das offene Ende des Blechpakets 8 wird dabei durch eine Serie von runden Einzelblechen 16 definiert.

## Patentansprüche

1. Blechpaketanordnung (4) für eine elektrische Maschine, mit einem Blechpaket (8), das in einer Axialrichtung (A) mindestens zwei Teilpakete (14) mit jeweils einer Vielzahl von polygonförmigen Einzelblechen (10) aufweist, wobei um den Umfang des Blechpakets (8) permanenterregte Magnete (12) angeordnet sind, **dadurch gekennzeichnet, dass** zwischen den Teilpaketen (14) ein oder mehrere runde Einzelbleche (16) angeordnet sind, deren Durchmesser kleiner oder gleich dem Innenkreis der polygonförmigen Einzelbleche (10) ist.

2. Blechpaketanordnung (4) nach Anspruch 1,
**dadurch gekennzeichnet, dass** die Magnete (12) um den Umfang der Teilpakete (14) sich im Bereich der runden Einzelbleche (16) berühren.

3. Blechpaketanordnung (4) nach einem vorhergehenden Ansprüche,
**dadurch gekennzeichnet, dass** die Magnete (12) an mindestens einer Endseite (AS, BS) des Blechpakets (8) über dem Teilpaket (14) überstehen.

4. Blechpaketanordnung (4) nach einem vorhergehenden Ansprüche,
**dadurch gekennzeichnet, dass** die Teilpakete (14) zueinander verdreht sind.

5. Elektrische Maschine mit einer Blechpaketanordnung (4) nach einem der vorhergehenden Ansprüche.

## Claims

1. Laminated core arrangement (4) for an electric machine with a laminated core (8), having at least two part cores (14), each with a plurality of polygonal individual sheets (10) in an axial direction (A), wherein permanently-excited magnets (12) are disposed around the circumference of the laminated core (8), **characterised in that** one or more round individual sheets (16), of which the diameter is less than or equal to the inner circle of the polygonal individual sheets (10), are disposed between the part cores (14).

2. Laminated core arrangement (4) according to claim 1, **characterised in that** the magnets (12) around the circumference of the part cores (14) touch each other in the area of the round individual sheets (16).

3. Laminated core arrangement (4) according to one of the preceding claims,
**characterised in that** the magnets (12) project beyond the part core (14) at at least one end side (AS, BS) of the laminated core (8).

4. Laminated core arrangement (4) according to one of the preceding claims,
**characterised in that** the part cores (14) are rotated in relation to one another.

5. Electric machine with a laminated core arrangement (4) according to one of the preceding claims.

## Revendications

1. Agencement ( 4 ) de paquet de tôles pour une machine électrique, comprenant un paquet ( 8 ) de tôles, qui a, dans une direction ( A ) axiale, au moins deux sous-paquets ( 14 ) ayant respectivement une pluralité de tôles ( 10 ) individuelles polygonales, dans lequel des aimants ( 12 ) à excitation permanente sont disposés autour du pourtour du paquet ( 8 ) de tôles, **caractérisé en ce que**, entre les sous-paquets ( 14 ), sont disposées une ou plusieurs tôles ( 16 ) individuelles circulaires, dont le diamètre est inférieur ou égal au cercle inscrit des tôles ( 10 ) individuelles polygonales.

2. Agencement ( 4 ) de paquet de tôles suivant la revendication 1, **caractérisé en ce que** les aimants ( 12 ), autour du pourtour des sous-paquets ( 14 ), se touchent dans la région des tôles ( 16 ) individuelles circulaires.

3. Agencement ( 4 ) de paquet de tôles suivant l'une des revendications précédentes,
**caractérisé en ce que** les aimants ( 12 ) dépassent du sous-paquet ( 14 ) au moins à un côté ( AS, BS ) d'extrémité du paquet ( 8 ) de tôles.

4. Agencement ( 4 ) de paquet de tôles suivant l'une des revendications précédentes,
**caractérisé en ce que** les sous-paquets ( 14 ) sont tournés les uns par rapport aux autres.

5. Machine électrique ayant un agencement ( 4 ) de paquet de tôles suivant l'une des revendications précédentes.
